# EUROPÄISCHE PATENTSCHRIFT

(11) **EP 0 403 690 B1**
(45) Veröffentlichungstag und Bekanntmachung des Hinweises auf die Patenterteilung: **12.05.1993**
(21) Anmeldenummer: 89119332.8
(22) Anmeldetag: 18.10.1989
(51) Int. Cl.: C08G 18/10, C08G 18/32, C08G 18/42

(54) **Verfahren zum Herstellen einer latent reaktiven, pastösen Formmasse**
Process for the preparation of a moulding mass in paste-form having delayed reaction
Procédé pour la préparation d'une masse moulée pâteuse à action de durcissement latent

(30) Priorität: 22.06.1989 DE 3920468
(43) Veröffentlichungstag der Anmeldung: 27.12.1990
(73) Patentinhaber: Firma Carl Freudenberg, 69469 Weinheim (DE)
(72) Erfinder: Mühlfeld, Horst, D-6149 Grasellenbach 3 (DE); Schuhmacher, Günter, Dr., D-6940 Weinheim (DE)

(56) Entgegenhaltungen:
- DE-A- 2 510 703
- DE-A- 3 843 221
- US-A- 4 071 279
- US-A- 4 247 676

## Beschreibung

Die vorliegende Erfindung betrifft ein Verfahren zum Herstellen einer latent reaktiven, pastösen Formmasse, mit der elastifizierte Duromer-Formteile hergestellt werden können, wie sie beispielsweise im Kraftfahrzeugbau als Motorkapselungen, Hitzeschilde und Ansaugrohre oder, bei Textilmaschinen, als Trägerscheiben für die Stützrollen Verwendung finden.

Die bisher für diese Zwecke eingesetzten Phenol-, Epoxid- oder ungesättigten Polyesterharze weisen hohe Festigkeiten und eine dauerhafte Hochtemperaturbeständigkeit bis über 200°C auf. Eine Einschränkung erfahren diese vorteilhaften Eigenschaften jedoch wegen der - insbesondere bei Temperaturen unterhalb 0°C - großen Sprödigkeit dieser Duroplaste.

Eine bessere Kältebeständigkeit bis hinab zu Temperaturen von minus 40°C wird erzielt durch die Verwendung von mit Glasfasermatten verstärkten Thermoplasten, z.B. Polypropylen. Gravierende Nachteile dieser Werkstoffe sind die mangelhafte Formbeständigkeit bei Temperaturen oberhalb 130°C und die zur Formung notwendigen hohen Drücke bis zu 1000 Tonnen/m², was insbesondere bei der Herstellung großvolumiger Bauteile hohe Werkzeug- und Pressenkosten verursacht.

US-A-4 247 676 offenbart lagerfähige, flüssige Polyurethanmischungen aus einem Präpolymer und einem Alkali-Halogensalzkomplex von 4,4'-Diphenylmethandiamin, wobei das Präpolymer durch Umsetzung eines flüssigen Materials mit 2 bis 5 Hydroxylgruppen, wie z. B. Polycaprolacton, und einer Mischung aus Toluoldiisocyanat und einem Methylendiphenyldiisocyanat hergestellt wird. Die genannten fließfähigen Mischungen dienen als gelartige Überzüge und Klebstoffkompositionen.

Die Aufgabe der vorliegenden Erfindung besteht darin, eine neue Formmasse als Grundmischung anzugeben, aus der elastifizierte Duromerformteile herstellbar sind, welche eine Vielfalt von Anforderungen, wie sie insbesondere von Fahrzeugherstellern vorgegeben werden, erfüllen:
Kältebeständigkeit bis hinab zu minus 40°C bei hoher Kerbschlagzähigkeit, Formbeständigkeit bis hinauf zu + 250°C (insbesondere bei der motornahen Anwendung der Formteile bedeutungsvoll), Verformbarkeit bei Preßdrucken, die mindestens eine Zehnerpotenz unter den bisher oft erforderlichen 1000 t/m² liegen, inertes Verhalten der Grundmischung auch bei längerer Lagerung und längerem Transport (Verbesserung der Verfügbarkeit größerer Mengen bereits hergestellter Formmassen), sehr niedrige Viskosität der Grundmischung, um einen großen Spielraum bei der Zugabe von Füllstoffen zu haben (damit große Variationsbreite bezüglich der mechanischen Eigenschaften der herzustellenden Formkörper), und dauerhafte Bindefähigkeit der Grundmischung während oder nach dem Verformen mit anderen Polyurethanwerkstoffen.

Die Lösung dieser für den Einsatz im Automobilbau unabdingbaren Aufgabenvielfalt ist mit bekannten Reaktionsmischungen bisher nicht erreicht worden und besteht erfindungsgemäß in einem Verfahren zur Herstellung einer latent reaktiven, pastösen Formmasse zur Herstellung von elastifizierten Duromer-Formteilen, welche von minus 40°C bis plus 250°C formbeständig sind, aus einer oberhalb der Raumtemperatur reaktiven, niedrigviskosen, nahezu stöchiometrischen Mischung von flüssigem Polyisocyanat und von endständige Isocyanatgruppen tragendem, flüssigem Polyurethan-Präpolymer sowie aus einem oberhalb der Raumtemperatur reaktiven Diamin, das durch die Verwendung der im kennzeichnenden Teil des ersten Patentanspruchs angegebenen Komponenten charakterisiert ist. Eine vorteilhafte Ausgestaltung sowie Verwendung sind in den Unteransprüchen aufgezeigt.

Bei Raumtemperatur ist die erhaltene Grundmischung über sechs Wochen lang stabil und lagerfähig. Erst oberhalb 100°C beginnt die Reaktion der Bestandteile merklich und verläuft bei 120 bis 180°C sehr schnell: 2 mm dicke Platten sind z.B. bei 170°C in 30 Sekunden vollständig durchgehärtet.

Als Methylendiphenyldiisocyanate mit einer Funktionalität von 2,0 bis 3,0 können verwendet werden (Roh-)4,4'- Methylendiphenyldiisocyanat (MDI) oder ein carbodiimidmodifiziertes MDI. Beide sind als Polyurethan-Edukte im Handel erhältlich.

Als geeignete Alkali-Halogensalzkomplexe von 4,4'- Diphenylmethandiamin, welche bei Raumtemperatur nicht, oberhalb + 120°C jedoch reaktiv sind, kommen in Frage NaCl- oder NaBr- haltige Komplexe. Während der Reaktion (oberhalb 120°C) zerfallen diese in die Ausgangskomponenten (1 Teil Halogenidsalz und 3 Teile Diamin). Das Diamin reagiert dann spontan mit dem Isocyanat zu Polyharnstoff. Bei Verwendung des Hexamethylendiamincarbamats findet hingegen nicht nur eine spontane Polyharnstoffbildung, sondern gleichzeitig ein Aufschäumen infolge des dabei freiwerdenden Kohlendioxids statt. Auf diese Weise kann daher das spezifische Gewicht des zu formenden Duromerteils verringert werden.

Die dritte Komponente der Grundmischung, das isocyanatterminierte Polyesterpolyol-Diisocyanat-Präpolymer mit einem Molekulargewicht von 800 bis 1350, wird hergestellt aus den Edukten Polycaprolacton mit einem Molekulargewicht von 500 bis 1000 und dem 2,4-/2,6- Isomerengemisch des Toluylendiisocyanats mit einem Mischungsverhältnis von 80:20. Dieses Präpolymer wird zu 1 bis 625 Gewichtsteilen pro 100 Teile des höherfunktionellen Isocyanats zugesetzt.

Oberhalb 120°C reagiert das Diamin mit dem mehrfunktionellen MDI und den endständigen Isocyanatgruppen der Polyesterpolyurethan-Präpolymere zu Polyharnstoff. Unterhalb dieser Temperatur findet keine nennenswerte Reaktion statt.

Ein wesentliches Merkmal der Erfindung ist, daß die bei Raumtemperatur nicht reaktive Grundmischung eine Viskosität von nur 1 bis 5 Pa.s besitzt. Dieser Viskositätsbereich liegt ausreichend niedrig, um hochgefüllte und dennoch fließfähige, pastöse Massen aus der flüssigen Grundmischung herstellen zu können. Ein bedeutend hoher Zusatz dieser Füllstoffe ist bekanntermaßen zur Variierung der mechanischen Eigenschaften der herzustellenden Formkörper oft erforderlich. Mit der Erfindung wird dabei nun dennoch die Masse nicht so stark verfestigt, daß ein Preßdruck beim Verformen bis zu 1000 t/m² notwendig wäre. Es wurde gefunden, daß selbst bei Zusatz von 150 Gew.-% an Füllstoffen zur Grundmischung Preßdrucke zum Verformen notwendig sind, die lediglich im Bereich von 10 t/m² liegen.

Der Zusatz von Füllstoffen zu verformbaren Massen ist eine bekannte Technik; diese Füllstoffe können z.B. sein Glasfasern, Kreidemehl, Flugasche, Hohlglaskugeln oder Abmischungen davon.

In einer weiteren Ausgestaltung der Erfindung ist es möglich, eine Glasfasermatte mit der Grundmischung, die gegebenenfalls weitere Füllstoffe enthalten kann, zu tränken. Auf diese Weise werden besonders zähe Formkörper erhalten; wegen der geringen Viskosität der Grundmischung dringt diese vollständig in die Poren der Glasfasermatte ein, was die mechanische Stabilität des entstehenden Formkörpers erhöht.

Mit dem erfindungsgemäßen Verfahren ist somit eine Grundmischung herstellbar, der wegen ihrer niedrigen Viskosität eine große Menge an Füllstoffen zugefügt werden kann, weswegen der Fachmann die mechanische Eigenschaften des herzustellenden, elastifizierten Formkörpers in weiten Bereichen zu beeinflussen in der Lage ist, wenn er Art und Menge der Zuschläge gezielt wählt. So können Härte, Festigkeit, Steifigkeit, Biegefestigkeit, Dimensionsstabilität und spezifisches Gewicht des fertigen Formkörpers auf einfache Weise modifiziert werden: Der Zusatz von Glasfasern erhöht die Festigkeit und den Elastizitätsmodul des Formkörpers. Feinkörnige Füllstoffe, z.B. Kreide, erhöhen dessen Steifigkeit. Mit Flugasche als Zusatz zum niedrigviskosen Reaktionsgemisch kann das spezifische Gewicht des Formkörpers erniedrigt werden. Werden Glasfasermatten mit der viskosen, reaktiven Mischung getränkt, können durch Heißverpressen besonders dimensionsstabile Formkörper hergestellt werden, die eine hohe Reißfestigkeit aufweisen. Dabei können weitere Zuschläge zur reaktiven Mischung, wie oben erwähnt, zusätzlich eingemischt sein, um eine weitere Modifikation der mechanischen Werte zu erzielen.

In jedem Falle sind die Verformungsbedingungen sehr milde, da wegen der geringen Zähigkeit der Formmasse auf Basis der erfindungsgemäßen Grundmischung der mechanische Widerstand gegen den Preßdruck klein ist, und zwar bedeutend kleiner, als dies bei der Verformung von Thermoplasten der Fall ist.

Der angegebene Temperaturbereich von 120 bis 180°C für das Verpressen hat sich im Hinblick auf eine kurze Aushärtungszeit und damit kurze Zykluszeiten an der Presse als besonders günstig erwiesen.

Die Grundmischung läßt sich in der Presse leicht mit anderen Polyurethanwerkstoffen, auch wenn diese in geschäumter Form vorliegen, verbinden durch Verpressen des Verbundes beider Werkstoffe bei 160 bis 180°C, wobei gleichzeitig die Verformung stattfindet. Die Verwendung eines Haftvermittlers erübrigt sich dabei, weil die Grundmischung latent reaktiv ist.

Alternativ dazu kann ein bereits fertig verformter Duromerkörper mit einem flüssigen, erfindungsgemäß hergestellten Polyurethanharnstoff-Reaktionsgemisch beschichtet werden, wobei nach der Aushärtung ebenfalls eine sichere Bindung beider Werkstoffe aneinander erhalten wird. Ebenfalls wird kein Haftvermittler benötigt; dennoch ist der Verbund so fest, daß ein zerstörungsfreies Trennen der Bestandteile voneinander nicht mehr möglich ist.

Im folgenden wird anhand zweier Beispiele die Herstellung der Grundmischung und deren Weiterverarbeitung zu einem elastischen Duromerformkörper beschrieben.

### Beispiel 1:

### Präpolymerrezeptur:

100,0 Gewichtsteile Polycaprolacton mit einem Molekulargewicht von 540
59,2 Gewichtsteile Toluylendiisocyanat; 80/20-Isomerengemisch 2,4/2,6

### Herstellung des Präpolymeren:

Polycaprolacton wird mit Toluylendiisocyanat unter Rühren 30 Minuten bei einer Temperatur von 100°C umgesetzt. Man erhält ein Präpolymer mit einem Isocyanatgehalt von 8,18 % und einer Viskosität von 54 Pa.s.

### Rezeptur der latent reaktiven Mischung:

86,2 Gewichtsteile Präpolymer mit einem NCO-Wert von 8,18 %
33,8 Gewichtsteile Roh-MDI (rohes 4,4'- Methylendiphenyldiisocyanat) mit einem NCO-Wert von 30,0 % (durch Analyse vor-ermittelt)
79,0 Gewichtsteile [NaCl] ^{.} 3[4,4'- Diphenylmethandiamin] mit einem Weichmacheranteil (Dioctylphthalat) von 50 %
50,0 Gewichtsteile Hohlglaskugeln (d: um 100 µm)

### Herstellung der reaktiven Mischung:

Die drei Grundkomponenten
Präpolymer,
Roh-MDI,
Diamin-Alkalisalzkomplex
werden in einem Rührbehälter bei Raumtemperatur vorgemischt. Die Hohlglaskugeln werden anschließend unter Rühren der Grundmischung zugegeben. Es entsteht eine gut gießfähige Paste mit einer Viskosität von 65 Pa.s.

Diese Paste kann mindestens 6 Wochen unter Feuchtigkeitsausschluß in einem dicht verschlossenen Behälter aufbewahrt werden, ohne Einbuße der guten Verarbeitbarkeit und ohne Veränderung in den Eigenschaften.

### Formen einer Motorkapselung:

In eine auf 170°C aufgeheizte Form wird ein Glasfaserzuschnitt, der aus einer Endlosglasfasermatte mit einem Quadratmetergewicht von 450 g ausgestanzt wurde, eingelegt. Die reaktive Paste wird über den Glasfaserzuschnitt gegossen, ein zweiter Glasfaserzuschnitt wird aufgelegt und die Form geschlossen. Bei einem Preßdruck von 1 kg/cm² werden die Glasfasermatten von der Paste vollständig durchtränkt, und die Form wird gleichmäßig ausgefüllt. Nach 30 Sekunden ist die Verformung abgeschlossen. Das 2 mm dicke Formteil ist vollständig durchgehärtet, eine Nachbehandlung ist nicht mehr notwendig.

Die Festigkeitseigenschaften wurden an Prüfplatten mit den Abmessungen 300 mm x 200 mm x 4 mm und mit 25 Gew.-% Glasfasergehalt bestimmt, die nach der gleichen Methode wie das Formteil hergestellt wurden.

| | |
|---|---|
| Zugfestigkeit: | 70 N/mm² |
| Bruchdehnung: | 1,8 % |
| Elastizitätsmodul: | 4200 N/mm² |
| Biegefestigkeit: | 101 N/mm² |
| Biegemodul: | 4650 N/mm² |
| Schlagzähigkeit bei Raumtemperatur: | 40 mJ/mm² |
| Schlagzähigkeit bei minus 40°C: | 51 mJ/mm² |
| Kerbschlagzähigkeit bei Raumtemperatur: | 40 mJ/mm² |
| Kerbschlagzähigkeit bei minus 40°C: | 44 mJ/mm² |

### Prüfung der Temperaturbeständigkeit:

Zur Prüfung der Temperaturbeständigkeit des duromeren Werkstoffes wird ein Kriechtest durchgeführt. Hierbei wird die Durchbiegung von belasteten Prüfstäben in Abhängigkeit von der Temperatur beobachtet. Die nach dem Beispiel hergestellten Prüfstäbe zeigen nach 24 Stunden bei 180°C unter Belastung noch keine Verformung, während z.B. Prüfstäbe aus glasfaserverstärktem Polypropylen schon nach 1 Stunde bei 150°C unter gleicher Belastung vollständig bis zum Boden der Prüfvorrichtung durchgebogen sind. Schon dieser einfach durchführbare Test zeigt die Temperaturbeständigkeit von Werkstoffen, die nach der erfindungsgemäßen Rezeptur hergestellt worden sind.

### Herstellung einer Motorkapselung mit Polyurethan-Weichschaum:

Bei der Herstellung des Verbundwerkstoffes, einer Motorkapselung mit einem Polyurethan-Weichschaum zur besseren Schallabsorption, werden die Glasfasermatten-Zuschnitte mit der pastösen Grundmischung getränkt und mit dem PolyurethanWeichschaumzuschnitt in die auf 200°C beheizte Form gelegt. Der Druck beträgt wieder 1 kg/cm². Während einer Minute wird der Polyurethan-Schaum bleibend verformt und gleichzeitig mit dem Duromerwerkstoff fest verbunden.

Wichtig ist hierbei, daß der Polyurethan-Weichschaum in einem Arbeitsschritt aufgebracht und mit der Grundmischung verbunden und verformt werden kann. Der Verbund ist so fest, daß ein zerstörungsfreies Trennen der Bestandteile voneinander nicht mehr möglich ist.

### Beispiel 2:

### Rezeptur der latent reaktiven Mischung:

85,0 Gewichtsteile Präpolymer, wie in Beispiel 1
115,0 Gewichtsteile Roh-MDI, wie in Beispiel 1
75,0 Gewichtsteile Hexamethylen-6,6'- Diamincarbamat mit einem Molekulargewicht von 160
180,0 Gewichtsteile Kreide mit einem mittleren Teilchendurchmesser von 3 µm

### Herstellung der latent reaktiven Mischung:

Die drei Grundkomponenten Präpolymer, Roh-MDI und Hexamethylendiamincarbamat werden bei Raumtemperatur in einem Rührbehälter vorgemischt. Die Kreide wird anschließend unter Rühren der Grundmischung zugegeben. Es entsteht eine gut gießfähige Paste mit einer Viskosität von 86 Pa.s.

Die Festigkeitseigenschaften wurden an Prüfplatten bestimmt, die aus Endlosglasfasermatten, getränkt mit der Reaktivpaste, 30 Sekunden bei 170°C mit einem Preßdruck von 1 kg/cm² gefertigt wurden. Eine Nachbehandlung war nicht mehr erforderlich. Der Glasfasergehalt beträgt im Endprodukt 25 Gew.-%.

| | |
|---|---|
| Zugfestigkeit: | 66 N/mm² |
| Bruchdehnung: | 1,6 % |
| Elastizitätsmodul: | 3800 N/mm² |
| Biegefestigkeit: | 80 N/mm² |
| Schlagzähigkeit bei Raumtemperatur: | 36 mJ/mm² |
| Schlagzähigkeit bei -40°C: | 47 mJ/mm² |

### Beispiel 3:

### Rezeptur der latent reaktiven Mischung:

68,0 Gewichtsteile Präpolymer, wie in Beispiel 1
36,0 Gewichtsteile Roh-MDI, wie in Beispiel 1
19,0 Gewichtsteile [NaCl]^{.}3[4,4'- Diphenylmethandiamin] mit einem Weichmacheranteil (Dioctylphthalat) von 50 %
20,7 Gewichtsteile Hexamethylen-6,6'- Diamincarbamat mit einem Molekulargewicht von 160
48,0 Gewichtsteile Kreide mit einem mittleren Teilchendurchmesser von 3 µm

### Herstellung der latent reaktiven Mischung:

In einem Rührbehälter werden die vier Grundkomponenten Präpolymer, Roh-MDI, Diamin-Alkalisalzkomplex und Hexamethylendiamincarbamat vorgemischt, und anschließend wird die Kreide eingerührt. Die Viskosität der gießfähigen Paste liegt bei 72 Pa.s.

Die Festigkeitseigenschaften wurden an Prüfplatten bestimmt, die aus Endlosglasfasermatten, getränkt mit der Reaktivpaste, 30 Sekunden bei 170°C mit einem Preßdruck von 1 kg/cm² gefertigt wurden. Eine Nachbehandlung war nicht mehr erforderlich.

Der Glasfasergehalt beträgt 25 Gew.-%.

| | |
|---|---|
| Zugfestigkeit: | 66 N/mm² |
| Bruchdehnung: | 1,66 % |
| Elastizitätsmodul: | 3800 N/mm² |
| Biegefestigkeit: | 80 N/mm² |
| Schlagzähigkeit bei Raumtemperatur: | 36 mJ/mm² |
| Schlagzähigkeit bei -40°C: | 47 mJ/mm² |

## Patentansprüche

1. Verfahren zur Herstellung einer latent reaktiven, pastösen Formmasse zur Herstellung von elastifizierten Duromer-Formteilen, welche von minus 40°C bis plus 250°C formbeständig sind, aus einer oberhalb der Raumtemperatur reaktiven, niedrigviskosen, nahezu stöchiometrischen Mischung von flüssigem Polyisocyanat und von endständige Isocyanatgruppen tragendem, flüssigem Polyurethan-Präpolymer sowie aus einem oberhalb der Raumtemperatur reaktiven Diamin, dadurch gekennzeichnet, daß man eine Grundmischung einer Viskosität zwischen 1 und 5 Pa.s bereitet aus
a) einem Methylendiphenyldiisocyanat mit einer Funktionalität von 2,0 bis 3,0,
b) einem bei Raumtemperatur nicht, oberhalb 120°C jedoch reaktiven Alkali-Halogensalzkomplex von 4,4'- Diphenylmethandiamin und/oder Hexamethylen-6,6'- Diamincarbamat und zusätzlich aus
c) 1 bis 625 Gewichtsteilen (pro 100 Teile Methylendiphenyldiisocyanat) eines Polyesterpolyol-Diisocyanat-Präpolymeren mit einem Molekulargewicht von 800 bis 1350, hergestellt aus den Edukten Polycaprolacton mit einem Molekulargewicht von 500 bis 1000 und dem 80/20-Isomerengemisch des 2,4-/2,6- Toluylendiisocyanats.

2. Verfahren nach Anspruch 1, dadurch gekennzeichnet, daß man die Viskosität der Grundmischung durch bis zu 150 Gew.-% Füllstoffe in Körner-, Pulver- oder Faserform erhöht.

3. Verwendung einer Grundmischung gemäß Anspruch 1 als Tränkmasse für eine Glasfasermatte.

## Claims

1. A process for the production of a pasty moulding composition having latent reactivity for the production of elasticised thermosetting plastic mouldings, which are dimensionally stable from -40°C to +250°C, from a virtually stoichiometric mixture of liquid polyisocyanate and of liquid polyurethane prepolymer carrying terminal isocyanate groups, which mixture is of low viscosity and is reactive above room temperature, and from a diamine which is reactive above room temperature, characterised in that a base mixture having a viscosity of from 1 to 5 Pa.s is prepared from
a) a diphenylmethane diisocyanate having a functionality of 2.0 to 3.0,
b) an alkali metal/halogen salt complex of 4,4'-diphenylmethanediamine and/or hexamethylene-6,6'-diaminecarbamate, which complex is unreactive at room temperature but reactive above 120°C, and additionally from
c) 1 to 625 parts by weight (per 100 parts of diphenylmethane diisocyanate) of a polyester polyol-diisocyanate prepolymer having a molecular weight of 800 to 1350, prepared from the educts of polycaprolactone having a molecular weight of 500 to 1000 and the 80/20 isomer mixture of 2,4-toluylene diisocyanate/2,6-toluylene diisocyanate.

2. A process according to claim 1, characterised in that the viscosity of the base mixture is increased by means of up to 150 % by weight of fillers in granular, powder or fibre form.

3. Use of a base mixture according to claim 1 as impregnating composition for a glass fibre mat.

## Revendications

1. Procédé pour la préparation d'une masse moulée pâteuse à action de durcissement latent pour la fabrication de pièces moulées en duromère élastifiées, qui ont une stabilité de forme de -40 °C à +250 °C, à partir d'un mélange approximativement stoechiométrique, faiblement visqueux, réactif au-dessus de la température ambiante, d'un polyisocyanate fluide et d'un prépolymère de polyuréthanne fluide, portant des groupes-isocyanates en fin de chaîne, ainsi que d'une diamine réactive au-dessus de la température ambiante, caractérisé en ce qu'on prépare un mélange de base ayant une viscosité comprise entre 1 et 5 Pa.s à partir de : a) un mélange de diphényldiisocyanate de méthylène ayant une fonctionnalité de 2,0 à 3,0,
b) un complexe alcali-sel halogéné non réactif à la température ambiante mais réactif cependant au-dessus de 120 °C et se composant de 4,4'-diphénylméthanediamine et/ou de hexaméthylène-6,6'-diaminecarbamate, et additionnellement de
c) 1 à 625 parties en poids (pour 100 parties de diphényldiisocyanate de méthylène) d'un prépolymère de polyesterpolyol-diisocyanate, d'un poids moléculaire de 800 à 1 350, préparé à partir des éduits de polycaprolactone d'un poids moléculaire de 500 à 1 000 et du mélange, dans la proportion de 80/20, d'isomères de 2,4-/2,6-diisocyanate de toluylène.

2. Procédé selon la revendication 1, caractérisé en ce qu'on augmente la viscosité du mélange de base à l'aide de jusqu'à 150 % en poids de matières de charge sous forme de grains, de poudre ou de fibres.

3. Utilisation d'un mélange de base selon la revendication 1 comme une masse d'imprégnation d'une nappe de fibres de verre.
